**Europäisches Patentamt**

**European Patent Office**

**Office européen des brevets**

(19)

(11) Veröffentlichungsnummer: **0 033 771**
**B1**

# EUROPÄISCHE PATENTSCHRIFT

(12)

(45) Veröffentlichungstag der Patentschrift:
**09.05.84**

(21) Anmeldenummer: **80107506.0**

(22) Anmeldetag: **02.12.80**

(51) Int. Cl.³: **B 64 C 27/51**

(54) · **Elastomere Dämpfungseinrichtung.**

(30) Priorität: **07.02.80 DE 3004451**

(43) Veröffentlichungstag der Anmeldung:
**19.08.81 Patentblatt 81/33**

(45) Bekanntmachung des Hinweises auf die Patenterteilung:
**09.05.84 Patentblatt 84/19**

(84) Benannte Vertragsstaaten:
**FR GB IT**

(56) Entgegenhaltungen:
**EP - A - 0 014 748**
**US - A - 3 669 566**

**Die Akte enthält technische Angaben, die nach dem
Eingang der Anmeldung eingereicht wurden und die
nicht in dieser Patentschrift enthalten sind.**

(73) Patentinhaber: **Messerschmitt-Bölkow-Blohm
Gesellschaft mit beschränkter Haftung,
Robert-Koch-Strasse, D-8012 Ottobrunn (DE)**

(72) Erfinder: **Braun, Dieter, Dr.-Ing., Alpspitzstrasse 8,
D-8011 Oberpframmern (DE)**
Erfinder: **Buchs, Wolfgang, Dipl.-Ing.,
Graf-Arco-Strasse 4, D-8151 Valley (DE)**
Erfinder: **Kirchner, Andreas, Ing.grad., Tulpenweg 6,
D-8011 Oedenstockach (DE)**

## Beschreibung

Die deutsche Offenlegungsschrift 2 558 709 betrifft eine einem Rotorblatt zugeordnete Dämpfungseinrichtung gemäss dem Oberbegriff des Patentanspruchs unter dem Kriterium einer wirksamen Schwingungsdämpfung bei nur geringer Beeinträchtigung des betriebsnotwendigen aeroelastischen Verhaltens des Rotorblattes. Bei mangelnder Dämpfung der Blattschwenkbewegungen würde das Rotorblatt wegen seines biegeweichen Blatthalses (mit dem Vorteil der Einsparung von Blattanschlussgelenken) zu instabilen Schwingungen neigen, welche z.B. bei der sogenannten Bodenresonanz zu Zerstörungen am betreffenden Rotor führen können. Daher ist eine hochwirksame Schwenkdämpfung eine wesentliche Forderung an das Rotorblatt.

Der Erfindung liegt die Aufgabe zugrunde, bei dem vorgenannten Rotorblatt die Wirksamkeit der Dämpfungseinrichtung zu steigern, wobei eine Gewichts- und Materialeinsparung erzielt werden soll.

Diese Aufgabe ist gemäss dem Kennzeichen des Patentanspruchs gelöst, also mit einer unter Blattschwenkbiegungen der biegesteifen Platte gegenüber verformbaren Zwischenlage, deren Dämpfungswirkung somit auf einer aus ihrer Geometrieänderung resultierenden Schubverformung im wesentlichen quer zur Blattlängsrichtung (also parallel zur Schwingungsebene) beruht im Gegensatz zu der bisher genutzten (geringeren) Schubverformung infolge Spannungen in Blattlängsrichtung. Hierbei sind durch die Unterteilung der Zwischenlage die bei einer einstückigen Zwischenlage vorhandenen Zonen geringer Dämpfungswirkung eliminiert.

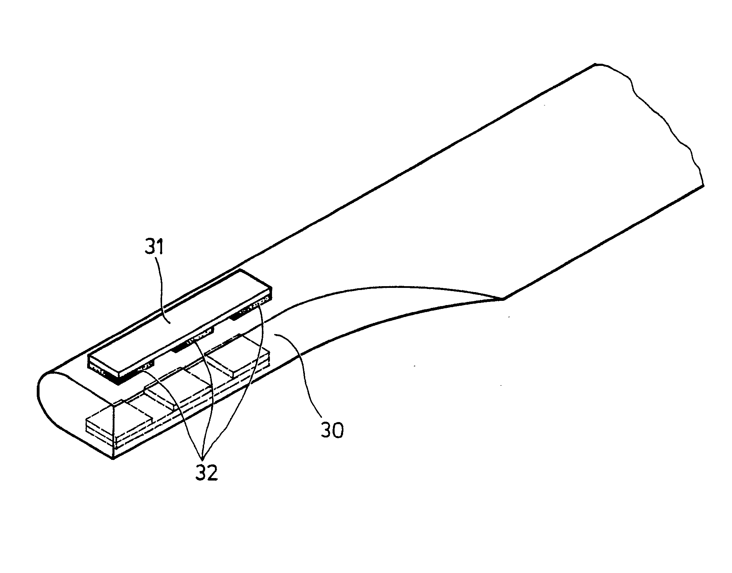

Ein Ausführungsbeispiel der Erfindung wird nachfolgend näher erläutert, wozu die Zeichnung in einer perspektivischen Ansicht ein (aus Darstellungsgründen) am Blattflügel abgebrochenes Rotorblatt zeigt, dessen Blatthals 30 in Blattschwenk- und Blattschlagrichtung biegeweich ausgebildet ist; hierzu kann der Blatthals 30 beispielsweise im wesentlichen aus in Blattlängsrichtung sich erstreckenden Glasfaserrovings in einer Kunstharzmatrix bestehen. Aufgrund dieses Blatthalses 30 ist das Rotorblatt an einer Rotornabe schwenk- und schlaggelenklos anschliessbar, z.B. in üblicher Weise mittels eines den Blatthals fassenden Beschlages. Wegen demzufolge jedoch möglicher Schwingungen des Rotorblattes ist zu deren Dämpfung in Blattschwenkrichtung längs des Blatthalses 30 auf der Blattdruck- und Blattsaugseite je eine biegesteife Platte 31, z.B. aus einem kunstharzgetränkten Fasergewebe, über einer in Blattlängsrichtung in drei Einzelstücke 32 unterteilten viskoelastischen Zwischenlage angeordnet. Die Verbindung der beispielsweise aus Silikon oder Polyurethan bestehenden Einzelstücke 32 mit dem Blatthals 30 und der Platte 31 kann durch Kleben oder Vulkanisieren hergestellt sein. Diese Konzeption einer Dämpfungseinrichtung jeweils auf der Blattdruck- und Blattsaugseite des Blatthalses 30 macht sich zu Nutze, dass es unter einer Schwenkbiegung des Blatthalses gegen die in dieser Richtung sehr steife Platte 31 zu einer Verformung der aus den Einzelstücken 32 insgesamt gebildeten Zwischenlage kommt, woraus eine relativ grosse Schubspannung ein den Einzelstücken und folglich ein hoher Dämpfungsgrad resultiert.

## Patentanspruch

Dämpfungseinrichtung eines schwingungsfähigen Rotorblattes mit einem zumindest in Blattschwenkrichtung biegeweichen Blatthals, an dem im Bereich grösster Biegeverformung auf der Blattdruck- und Blattsaugseite in Längsrichtung sich erstreckend jeweils eine in Richtung der aufzubringenden Dämpfungskraft biegesteife Platte über eine Zwischenlage aus einem viskoelastischen Material hoher Dämpfungsfähigkeit angeordnet ist, dadurch gekennzeichnet, dass die Zwischenlage als einzige Verbindung der biegesteifen Platte (31) mit dem Blatthals (30) in Blattlängsrichtung in voneinander beabstandete Einzelstücke (32) unterteilt ist.

## Claim

A damping device of an oscillatory rotor blade having a blade neck bendingly yieldable at least in the swivel direction of the blade and on which, in the region of greatest bending deformation and extending in the longitudinal direction on the blade pressure side and the blade suction side, in each case a plate, resistant to bending in the direction of the damping force that is to be applied, is arranged by way of an intermediate layer made of a viscoelastic material of high damping capacity, characterised in that the intermediate layer, as sole connection of the plate (31) which is resistant to bending to the blade neck (30), is subdivided in the longitudinal direction of the blade into individual pieces (32) which are spaced apart from one another.

## Revendication

Dispositif d'amortissement d'une pale de rotor capable d'osciller et munie d'un col souple à la flexion au moins en direction de traînée de ladite pale sur lequel col une plaque rigide à la flexion en direction de la force d'amortissement à fournir est chaque fois disposée en direction longitudinale, au-dessus d'une couche intermédiaire en un matériau viscoélastique à capacité d'amortissement élevée, sur la face de compression et la face d'aspiration de la pale dans la région de la plus grande déformation sous flexion, caractérisé par le fait que la couche intermédiaire est divisée, en tant qu'unique jonction de la plaque rigide à la flexion (31) au col (30) de la pale, en des morceaux individuels (32) en direction longitudinale de la pale.

31

32

30